# EUROPEAN PATENT SPECIFICATION

(11) **EP 1 772 812 B1**
(45) Date of publication and mention of the grant of the patent: **10.08.2011**
(21) Application number: 06020479.9
(22) Date of filing: 28.09.2006
(51) Int. Cl.: G06K 7/00, G06K 7/08

(54) **RFID reader with programmable I/O control**
RFID-Leser mit programmierbarer I/O-Steuerung
Lecteur RFID avec contrôle E/S programmable

(30) Priority: 30.09.2005 US 239959
(43) Date of publication of application: 11.04.2007
(73) Proprietor: Rockwell Automation Technologies, Inc., Mayfield Heights, OH 44124 (US)
(72) Inventor: Morse, Richard A., Hudson OH 44236 (US); Bapat, Vivek R., Pittsburgh Pennsylvania 15243 (US); Chand, Sujeet, Brookfield Wisconsin 53045 (US); Hall, Kenwood H., Hudson OH 44236 (US); Owen, Joseph P. Jr., Elm Grove Wisconsin 53122 (US); Pietrzyk, Arthur P., Thompson OH 44086 (US); Somogyi, Andreas, Sagamore Hills OH 44067 (US); Tinnel, Kenneth A., Loveland OH 45140 (US)
(74) Representative: Grünecker, Kinkeldey, Stockmair & Schwanhäusser Anwaltssozietät

(56) References cited:
- WO-A2-2005/045743
- US-B1- 6 677 852

## Description

The invention relates to radio frequency identification (RFID), and more specifically, to a user programmable RFID reader architecture that accommodates differing application environments.

Radio frequency identification (RFID) is an emerging technology that leverages electronic data and wireless communication for identification purposes and can be utilized with systems from secure Internet payment systems to industrial automation and access control systems. In particular, RFID is technology that facilitates automatic identification that enhances data handling processes and is complementary in many ways to other data capture technologies, such as bar coding. However, unlike other forms of data collection, such as bar coding and/or manual methods, RFID relieves employees from the repetitive, time-consuming and error-prone process of obtaining data from countless thousands of items. A utility of an RFID system can be to carry data in suitable transponders, generally known as RFID tags, and to retrieve data by machine-readable means at any desired time and place to satisfy particular application needs. Thus, the benefits of utilization of RFID technology include reduced labor costs, simplified business processes, improved inventory control and increased sales.

Today RFID readers use some additional technology to verify that an object that should have been, for example, has been read. Some of these readers come with a pre-programmed set of inputs and outputs to augment the logic for detecting and validating an object. Thus, these readers use a fixed algorithm to validate that a read should happen, has happened, and/or was missed. As RFID technology is applied to new, existing, or legacy systems and products, the requirements for such readers should change to accommodate differing application environments. Currently, to address such changing environments, manufacturers create RFID readers with different compliments of I/O, I/O interfacing, and algorithms, thereby forcing the consumer to absorb additional costs for each application environment.

Further disadvantages of incorporating fixed programming into an RFID reader relates to product development and manufacturing concerns. The burden placed on product development via fixed programming becomes enormous as deference must now be given to each product that is being supported. Additionally, manufacturing must address similar burdens by now having to consider somewhat similar yet different RFID reader products for each application desired by the consumer.

US-B1-6677852 discloses an RFID reader which reads a master control tag to upload sets of instructions from the tag to a memory resident in the reader. Thereafter, the reader may read a control tag to select one or more sets of instructions stored in the memory. It is described that if the reader reads a tag which is defined by a tag type field as being a master control tag, then a processor included in the reader overwrites some or all of the instructions stored in the reader's memory with new sets of instructions read from an instruction field of the master control tag.

WO 2005/045743 A2 relates to a system and method for acquisition and management of data in RFID systems. A set of tools is suggested to integrate a heterogeneous set of readers and hosts. A system is shown that includes a plurality of device/reader interfaces having program code which allows other system components to interact with devices. Devices are shown with antennae for identifying the presence of tags. It is suggested that interfaces comprise a device-specific set of instructions and a device-neutral set of instructions. It is further suggested that, upon implementation, the interface can be configured to interact with the devices specified. It is further suggested that the disclosed system can be installed for operation, regardless of the RFID reader to be used, and upon determining which reader is being used, the system is configured to interact with the reader through interface.

It is the object of the present invention to enable an improved system and method for processing data read from more than one RFID reader.

The object is solved by the subject matter of the independent claims.

Preferred embodiments of the present invention are defined by the dependent claims.

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The subject invention relates to the use of radio frequency identification (RFID) technology, and more specifically, to expanding the capability of an RFID reader to provide adaptability to accommodate differing physical conditions, configurations, and application environments. Differing physical conditions can include, for example, different types of RFID tags, different algorithms needed to obtain utilizable data from the tags, disparate I/O configurations, and functionality to identify valid/invalid RFID tag reads, whereas environments can include parts assembly versus, product assembly that can include the parts, for example. However, as described herein the phrases physical conditions and application environment are to be considered interchangeable as meaning the same thing.

In one aspect of the subject invention, a read component (e.g., an RFID reader) is provided with user-programmable capability via a user-programmable (UP) component that facilitates reading an RFID tag and interfacing to I/O that functions as a validation mechanism that the read operation has occurred. The UP component is user programmable to receive, store, and execute application specific programs. The flexibility provided by the UP component facilitates application of the read component to new and/or different systems and products.

In one exemplary implementation, the UP component is embodied into the RFID reader such that configuration and programmability is provided to program the reader and associated I/O and other components for a specific application environment.

In another implementation, the UP component is embodied in a separate device that can interface to an RFID reader. The UP device can include a common interface to the RFID reader for activating a read and receiving a status as to whether a successful or unsuccessful read has been performed, for example. Other associated I/O instructions or code can then be exercised with logic that is programmed by a user in accordance with the specific environment. In one aspect, the user-programmable code can be written and debugged on a remote computing platform that can simulate the RFID reader functionality and I/O into which it will be stored and executed.

In yet another aspect of the invention, a central user-programming platform or device can be provided that interfaces to a plurality of RFID readers for download of user-programmable instructions thereto according to particular environment. This allows the RF technology part of the product to be developed and produced separately and later combined with the programmable device subsystem to create a fully functional I/O control programmable RFID reader.

To the accomplishment of the foregoing and related ends, certain illustrative aspects of the invention are described herein in connection with the following description and the annexed drawings. These aspects are indicative, however, of but a few of the various ways in which the principles of the invention can be employed and the subject invention is intended to include all such aspects and their equivalents. Other advantages and novel features of the invention will become apparent from the following detailed description of the invention when considered in conjunction with the drawings.

### BRIEF DESCRIPTION OF THE DRAWINGS

FIG. 1 illustrates an RFID system that employs user-programmability for application environment in accordance with the innovation.

FIG. 2 illustrates a methodology of providing user programming in accordance with the invention.

FIG. 3 illustrates an RFID reader system that employs a UP component in accordance with the invention.

FIG. 4 illustrates an RFID reader system where a UP component is employed as an external module that is interfaceable to an RFID reader.

FIG. 5 illustrates an RFID reader system that facilitates separate user-programmability for reader I/O and read operations in an external UP component module in accordance with the subject invention.

FIG. 6 illustrates an RFID reader system that facilitates separate user-programmability for reader I/O and read operations in accordance with the subject invention.

FIG. 7 illustrates a system that employs a validation component as part of an RFID reader in accordance with the invention.

FIG. 8 illustrates a system that is a more modular representation of a user-programmable implementation.

FIG. 9 illustrates a user-programmable system for reading RFID tags in accordance with the subject invention.

FIG. 10 illustrates a user-programmable system that employs a PLC and HMI subsystem in accordance with the subject invention.

FIG. 11 illustrates a system that employs a plurality of RFID readers and associated UP components in different environments accordance with an innovative aspect.

FIG. 12 illustrates a methodology of providing user program flexibility across different environments based on tag data according to an aspect of the subject invention.

FIG. 13 illustrates a methodology of changing a user program based on tag data.

FIG. 14 illustrates a system where a UP component interfaces to multiple RFID readers in accordance with the disclose innovation.

FIG. 15 illustrates a methodology of interfacing a single external UP component to multiple RFID readers according to an aspect.

FIG. 16 illustrates a system that employs multiple UP components and multiple readers that communicate with an external system for program management.

FIG. 17 illustrates a system that employs a PLC which includes a UP component.

FIG. 18 illustrates a block diagram of a computer operable to execute the disclosed architecture.

FIG. 19 illustrates a schematic block diagram of an exemplary computing environment in accordance with the subject invention.

### DETAILED DESCRIPTION OF THE INVENTION

The invention is now described with reference to the drawings, wherein like reference numerals are used to refer to like elements throughout. In the following description, for purposes of explanation, numerous specific details are set forth in order to provide a thorough understanding of the subject invention. It may be evident, however, that the invention can be practiced without these specific details. In other instances, well-known structures and devices are shown in block diagram form in order to facilitate describing the invention.

As used in this application, the terms "component" and "system" are intended to refer to a computer-related entity, either hardware, a combination of hardware and software, software, or software in execution. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

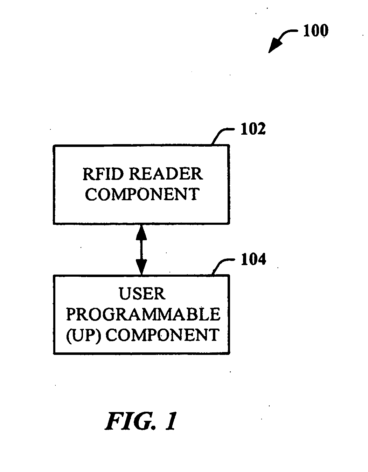

Referring initially to the drawings, FIG. 1 illustrates an RFID (radio frequency identification) system 100 that employs user-programmability for application environment in accordance with the innovation. The system 100 comprises an RFID reader component 102 (*e.g*., an RFID reader) that includes hardware and/or software in support of reading data from an RFID tag. In another implementation, the reader component 102 also includes write capability such that the reader component 102 can write data to the RFID tag. The system 100 also includes user-programmable (UP) component 104 that interfaces to the reader component 102, and supports user-programming capability such that the reader component 102 can be employed in a variety of differing environments. The UP component 104 facilitates application of an RFID reader to new and/or different systems and products throughout a customer environment, and across many different environments of different customers. The UP component 104 can be employed in a number of different ways, which will be described in greater detail *infra.*

Once a programming device is interfaced to the UP component 104 or an associated system that facilitates suitable access to the programming components of the UP component 104, an application specific program can be loaded thereinto. As previously mentioned, the application-specific program allows an RFID reader to be employed in many different industrial environments, which can include by example, but not by limitation, applications that employ different types of RFID tags, items and products associated with the tags, shipping and receiving points, assembly line processes, and so forth. In such cases, numerous types of I/O can also be employed to function as triggers and event states for monitor and control of processes, hardware systems, and software systems. The I/O are utilized in combination with the RFID system for automation of the associated processes such as a read confirmation, item detection, RFID tag reading and tag data interrogation, and many other related checks and confirmation processes. One example of one such distinct application type includes a conveyor belt carrying RFID tagged product from one point in the manufacturing process to another. I/O data can include, for instance, speed of the conveyor belt, distance of the reader from the product and the product's associated RFID tag, the means for detection of product upon arrival at the reader, the type of RFID tag, and so forth, any or all of which can affect the type of user-programmable instructions uploaded to a given RFID reader for operation.

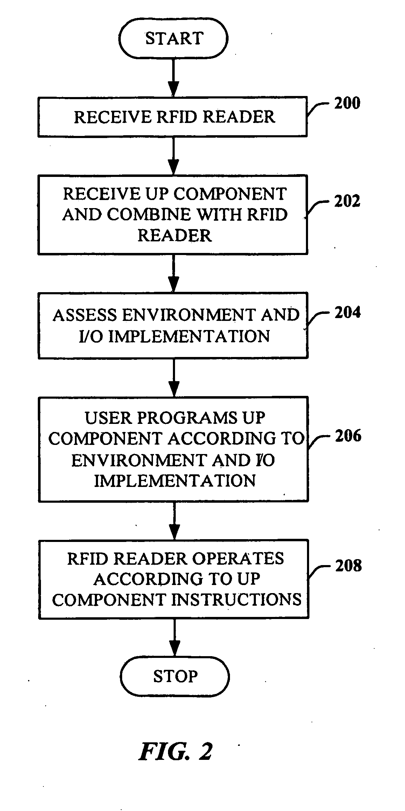

FIG. 2 illustrates a methodology of providing user programming in accordance with the invention. While, for purposes of simplicity of explanation, the one or more methodologies shown herein, *e.g*., in the form of a flow chart or flow diagram, are shown and described as a series of acts, it is to be understood and appreciated that the subject invention is not limited by the order of acts, as some acts may, in accordance with the invention, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the invention.

At 200, an RFID reader component (*e.g*., an RFID reader) is received for use in an RFID environment. At 202, a UP component is provided and combined with the reader. Note that as described hereinbelow, this combing operation can include designing the UP component into the reader as a single unit. Another implementation provides the UP component as a separate module that attaches to the RFID reader and interfaces to ports and/or other suitable interfaces to interact with the existing reader logic for user programming, control, and data processing. This can apply to both fixed RFID readers and portable RFID reading devices. The interface can be accomplished by any number of means applicable to programming, data transfer, downloading, and the like. Once the interface is achieved, the UP component can be configured and/or programmed to become application specific based on many factors. These factors can include, but are not limited to the RFID tag type, RFID tag data type, the associated process I/O, and other factors that relate to application control and feedback.

At 204, the user assesses the environment in which the RFID reader is to be employed and the associated I/O implementation for that environment. At 206, the user programs the UP component such that the RFID reader now conforms to at least the I/O implementation and other factors present in the environment. At 208, the RFID reader operates according to UP component instructions. It is to be appreciated that the reader can also include one or more programs that facilitate management of onboard functions, aside from the program instructions provided by the UP component that can supplement the reader program(s), interact with, and/or override the onboard programs to facilitate the desired operational end result.

The UP component can interact with I/O components that include item detection and validation parameters. The I/O components can include data unique to the tag/product, as well as data relating to a successful/unsuccessful read. The interface between the reader component and the UP component can be accomplished in part *via* the user-provided application specific program. The application specific program can incorporate code related to a type of algorithm employed for processing tag data contained on the RFID tag and the I/O requirements for system processes and interactions, for example.

One such requirement can be an item detection system. As products equipped with accompanying RFID tags move down a conveyor or on pallets past a check point, for example, it may be desired for the reader to be notified that there is a tag and associated part in position to be scanned or moving toward the checkpoint for scanning. Notification can be accomplished by many common I/O devices or systems, for instance, optical scanners, limit switches, or timers. Additionally, the variety and type of detection systems and sensors can change from environment to environment. Accordingly, the UP component facilitates field programming to accommodate the variety of systems and sensors utilized for read validation and confirmation, for example.

In one exemplary environment, consider that an assembly line is configured with an optical scanning sensor switch that operates by means of a beam and a reflector. When the light path of the beam to the reflector is interrupted by the tagged object, the switch can send a feedback signal that is representative of a state change. Further, consider that the optical switch is configured to change state whenever a product interrupts the beam, and that the feedback signal is communicated to a control system. The UP component can include software instructions that accommodate the state change and/or triggering signal from detection I/O, in this case, the optical scanning sensor switch, to command the reader to interrogate and receive an RFID tag.

If the optical scanning switch is triggered, and the reader component then broadcasts an interrogation signal but does not receive a valid reply, such failed-read information can be communicated from the reader component to the UP component. Upon receiving the failed-read information, the UP program can respond to the data in a pre-programmed way that is specific to the application. For instance, in one variation of the subject example, in response to a failed read, it may be desirable to reverse direction of the conveyor belt and attempt another read. Other options could include stopping the belt, raising an alarm, prompting a user to attend to the matter, and so forth. Regardless of the action to be taken for the unsuccessful read, the UP component is user configurable to receive and execute a program specific to the course of action desired by the user. Alternatively stated, the user can design a program to provide a specific response to different situations and circumstances, and then load and execute the program on the UP component. Additionally, the user can configure the UP software to interact in a different way for the same environment in which a previous program was executed.

As indicated *supra,* the reader component and UP component can interface in support of item validation. Data from RFID tags can be stored in an encoded format, and stored in a plurality of fields comprising varying numbers of bits. Each field can contain information related to a specific feature of the product on which the tag is attached. For example, product lifecycle information such as item name, manufacture date, shipping information, customer name, and so on, can be encoded in the tag. In order to obtain the encoded information stored on the RFID tag, the RFID reader utilizes an algorithm suitable for extracting the encoded information desired for processing at any particular point in time. Thus, in contrast to conventional RFID readers that are substantially limited in application due to programming limitations, the subject invention overcomes tag-specific limitations by incorporating the user-programmable capability that allows one reader to be employed in a number of different environments to read and process an array of disparate tags types, tag data structures and associated algorithms.

As previously described, the UP component can include one or more programs that are uploaded before read processing of tags commences. In another implementation, the previously-installed user program can be swapped out in substantially realtime based upon data or other information sensed or received by the reader or other systems during operation. For example, if the tag information being scanned suddenly changes, the UP component can be configured to automatically sense this and dynamically request installation of suitable software that is compatible with the new tag types and tag information being read. Alternatively, different versions of user-programmable software can be stored in the UP component such that changeover or processing is transparent and quick based on the data being received and processed.

To further illustrate another aspect of the subject invention, consider that a product X is associated with RFID tag X in a manufacturing process. When product X is read by the reader component, tag data relating to product X is obtained in part by the algorithm stored and/or executed in the UP component. In accordance with the invention, the reader and UP components can be repositioned to operate in a different environment that deals with a product Y which is outfitted with RFID tag Y. Product X differs greatly from product Y, for instance, X relates to pharmaceuticals whereas Y relates to airline baggage. Consequently, the data stored in tags X and Y greatly differs and further, can made by different tag manufactures using different protocols. In response to the relocation and change in application environment, the UP component is user programmable such that the associated reader can be reconfigured and integrated into the product Y environment for use with product Y.

It is to be appreciated that the reader/UP components find application in a wide range of system categories such as surveillance, portable data capture, networked systems, positioning systems transportation and logistics, manufacturing and processing, security, animal tagging, waste management, time and attendance, postal tracking, airline baggage reconciliation, and road toll management, just to name a few.

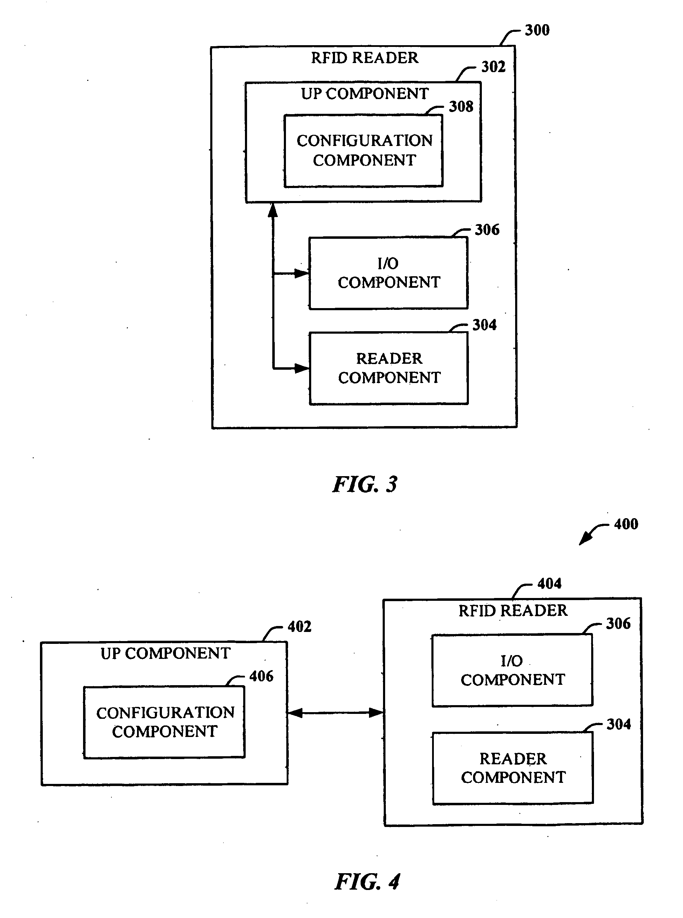

Referring now to FIG. 3, there is illustrated an RFID reader system 300 that employs a UP component 302 in accordance with the invention. The reader 300 can include a reader component 304 that facilitates read operations on the reader, and also an I/O component 306 that facilitates I/O operation and interfacing for I/O subsystem that can be employed in the reader 300. For example, the I/O component 306 can include an interface (wireless and/or wired) that communicates with external I/O systems that determine when a tagged product is available for reading its associated RFID tag. This further provides a means of confirmation (or validation) that the tag information was most likely received from a product that was intended to be read at a predetermined location (*e.g.,* within range of the reader 300).

In this implementation, the UP component 302 is internal to a housing of the reader system 300. Here, the UP component 302 includes configuration capability for both a UP read component 304 and a UP I/O component 306. The UP component 302 facilitates the user-programming of either the UP reader component 304 or the I/O component 306, or both components (304 and 306). The UP I/O component 306 provides at least the capability to receive status information as to whether a read operation was successful or unsuccessful. Additional internal and/or external I/O can be exercised by the I/O component logic 306 that can be programmed and stored on the UP component 302.

The UP component 302 includes a configuration component 308 that receives user input and instructions which facilitate customized control of the reader component 304 and/or the I/O component 306. Accordingly, the reader 300 can be employed in a first environment to interact with environment operations and systems and then moved to a second environment and undergo reprogramming, if needed, to interact in the second environment with second environment operations and systems.

The UP read component 304 can also be employed to receive, store, and execute an algorithm specific to the application and/or validation of an RFID tag, for example. Moreover, the UP I/O component 306 can be configured to receive additional I/O to meet system and application requirements. The configuration can include expandable access points for hardware interfaces, as well as the associated storage and processing capacity for a program that configures the hardware interfaces.

As indicated *supra,* the system 300 components are internal to a common housing or package. System 300 can also employ a component (not shown) that facilitates data output with a user peripheral, such as a monitor, printer, or some other user recognizable medium. Upon receiving an RFID tag, such a component can display the captured product information to a user. System 300 can further employ a communications component (not shown) that communicates data to an external system. The external system can be, for example, an inventory tracking system, a security hub, and an animal tagging database, just to name a few. The communications component can accomplish communication wirelessly, or *via* a wired connection, a docking station interface, or other method of communication commonly used for electronic devices.

In one example application, the system 300 can be a portable unit that reads RFID tags in a warehouse. The portable unit can be configured such that it optimizes desirable portability characteristics such as weight, size, footprint, geometry, *etc.* Considering that all components of system 300 can be located within a common housing, the subject invention offers further convenience and applicability. For example, as the user traverses the warehouse, the user can configure or cause the reader to be configured, either manually or automatically, according to the product and/or application in which the reader is being utilized.

Continuing with the warehouse example, a user can scan a product with RFID tag type X to obtain at least product data. Upon scanning the product, the UP read component 304 can employ a tag-specific algorithm to provide information relating to the scanned product. Such information can be viewed by the user on a display component of the portable unit. Additionally, the information can be sent to a central tracking database or other applicable system by means of the communication component, also located within the housing of the portable device or located in a device interfaceable with the portable device.

Upon completion of reading the product with RFID tag type X, the user can then reconfigure the RFID reader to collect product data from products equipped with a different RFID tag type, for example, an RFID tag type Y. Where the tag Y information cannot be read by this particular reader, the UP component facilitates employing the appropriate program suitable to complete the read operation, and that can interface with the I/O for validation of the read. As indicated hereinabove, the UP component 302 can include several programs that cause reconfiguration of the reader to complete the read operation. To facilitate reconfiguration of system 300, the UP component 302 that facilitates configuration can also be portable and/or transportable by the user. Further, it can store a plurality of application specific programs needed to interface with each type of RFID tag at the user warehouse. This UP component device can also be easily readily interfaced with system 300, through a serial cable, USB, CAT5, *etc.* The user can then easily select the applicable program and download it to the portable device. It is to be further emphasized that the reconfiguration of system 300 performed by the user in the field can optimize overhead relating to human cost such as speed of data collection, cost of labor, *etc.*

Such a portable device offers many benefits. In the warehouse example, products outfitted with disparate RFID tag types that store data in different fields, and that can have different numbers of bits, *etc.,* can be read by a single or a fewer number of devices. That is, the RFID reader can now be utilized in a number of differing environments, and not relegated to a specific application or location due to hardware/software design limitations.

FIG. 4 illustrates an RFID reader system 400 where a UP component 402 is employed as an external module that is interfaceable to an RFID reader 404. System 400 is comprised of two primary components: the UP component module 402 and the RFID reader 404. The UP component module 402 includes a UP configuration component 406 that facilitates interfacing to and programming of RFID read logic and related software of the RFID reader 404. The reader 404 can include the reader component 304 and I/O component 306. However, as will be described *infra,* the reader 404 can be reduced to an even more fundamental and general-purpose RFID reading device by moving the I/O component 306 outside of the reader 404.

This external UP component module 402 configuration facilitates a more general-purpose programmable RFID reader device, where the UP component 402 can utilize a standard interface to the RFID reader 404 for communication and control therewith, if desired. In another implementation, the interface can be a non-standard interface that facilitates the same or similar functionality. This allows the RF technology segment of system 400, namely the RFID reader 402, to be developed and produced separately from the UP technology. Additionally, the configuration allows for development and manufacture of the UP component 402 to be carried out independently from the RF component. Upon deployment for use in the field, the RFID reader 404 can then be interfaced or combined with the UP component 402 to create the fully functional and operational user-programmable RFID reading system 400.

In system 400, the RFID reader 404 can consist of a minimum of hardware and software to read an RFID tag. All data processing and storing can be accomplished *via* the UP component 402. Although the RFID reader 404 can consist of a minimum of hardware, it can also have additional features not depicted in FIG. 4. For example, the communications interface between the UP component module 402 and the RFID reader 404 can utilize a single common interface (*e.g*., USB) or provide the capability to accommodate a variety of different common interfaces (*e.g*., USB and IEEE 1394). Thus, the UP component module 404 can interface to many legacy or existing readers in currently in the use, and also provide upward compatibility with new technologies yet to be utilized in the field of RFID.

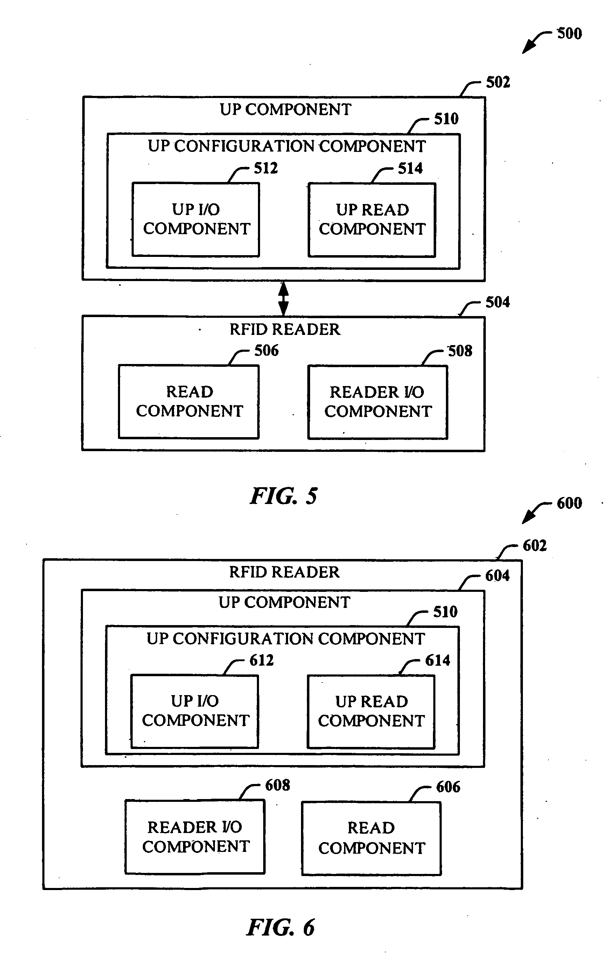

FIG. 5 illustrates an RFID reader system 500 that facilitates separate user-programmability for reader I/O and read operations in an external UP component module 502 in accordance with the subject invention. In this particular implementation, the system 500 includes a UP component 502 in communication with an RFID reader 504. The reader 504 includes a read component 506 that functions to facilitate read operations and an I/O component 508 that facilitates I/O management of the reader 504 and with I/O system interface to external systems. In support of separate user-programming control, a UP configuration component 510 includes a separate UP I/O component 512 such that a user can user-program only the I/O portion of the reader 504, and a UP read component 514 such that the user can user-program only the read component 506 of the reader 504. Again, the UP component 502 can be implemented as an external module that attaches or interfaces to the reader 504 in a suitable and convenient manner.

Such a system configuration is advantageous for an RFID reader that has preconfigured I/O that matches the hardware required for the reader application. The UP component 502 facilitates applicability to any environment by storing and executing application-specific programs, including but not limited to RFID algorithms, communication protocols to external devices and systems, and the like.

FIG. 6 illustrates an RFID reader system 600 that facilitates separate user-programmability for reader I/O and read operations in accordance with the subject invention. In this particular implementation, the system 600 includes a reader 602 that includes a UP component 604. The reader 602 includes a read component 606 that functions to facilitate read operations and a reader I/O component 608 that facilitates I/O management of the reader 602 and with I/O system interface to external systems. In support of separate user-programming control, a UP configuration component 610 includes a separate UP I/O component 612 such that a user can user-program only the I/O portion of the reader 602, and a UP read component 614 such that the user can user-program only the read component 606 of the reader 602. The UP component 604 facilitates applicability to any environment by storing and executing application-specific programs, including but not limited to RFID algorithms, communication protocols to external devices and systems, and the like.

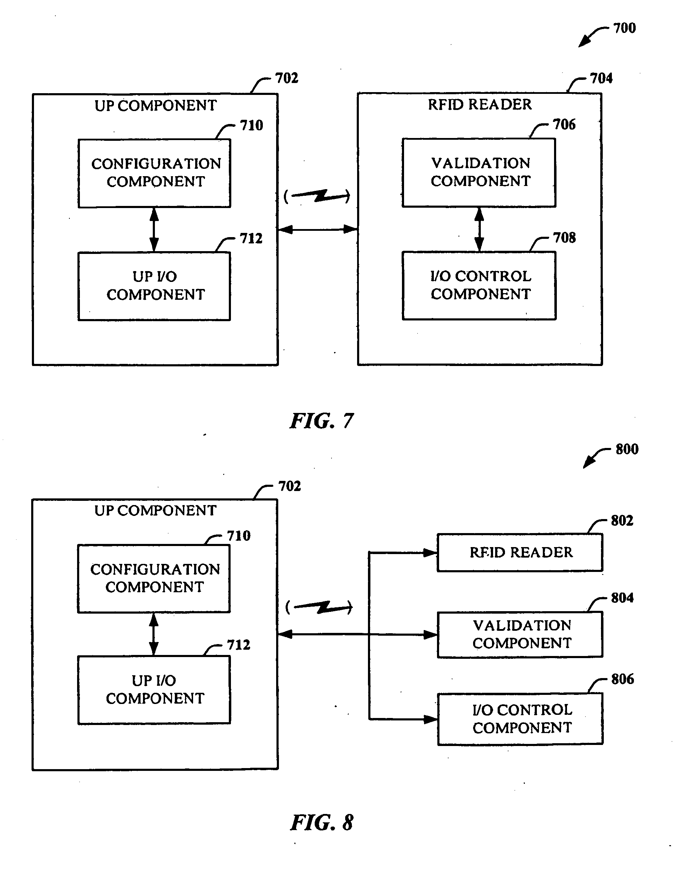

FIG. 7 illustrates a system 700 that employs a validation component 702 as part of an RFID reader 704 in accordance with the invention. As stated *supra,* the RFID reader need not be limited to only RFID tag reading hardware/software. Here, the RFID reader 704 includes a validation component 706 and an I/O control component 708. The validation component 706 can be programmed to include an algorithm that relates to a certain type of RFID tag data. The validation component 706 can also include necessary hardware and software to recognize a successful/unsuccessful tag read operation. The I/O component 708 can be configured for use with existing hardware/software interfaces for operation of the RFID reader 704.

The RFID reader 704 interfaces to the UP component 702 that includes one or more of the capabilities described *supra* with respect to other UP components (*e.g.,* UP components 104, 302, 402, 502 and 604). The interface can be accomplished *via* wired and/or wireless communications, and by way of other forms of device communications such as infrared and optical communications, for example.

The RFID reader 704 can be of a type that has an application-specific program and/or I/O configuration program stored and executed within the device. The RFID reader 704 may or may not be programmable.

The UP component 702 includes both a configuration component 710 that is separate from a UP I/O component 712, and that facilitate user-programming of the UP I/O component 712 and one or both of the validation component 706 and the I/O control component 708. Thus, the UP component 702 can work in tandem with the validation component 706 and the I/O control component 708 to further tailor the system 700 to a specific application environment.

FIG. 8 illustrates a system 800 that is a more modular representation of a user-programmable implementation. Although the RFID reader 704 of FIG. 7 was shown to contain the validation component 706 and the I/O component 708, those components can be implemented external to an RFID reader 802. Accordingly, a validation component 804 and an I/O control component 806 are shown external and in communication with the reader 802 and the UP component 702. As depicted in FIG. 7, the UP component 702 includes the configuration component 710 and the UP I/O component 712. In this manner, maximum flexibility and freedom is allowed to select and configure hardware and software components to a particular application.

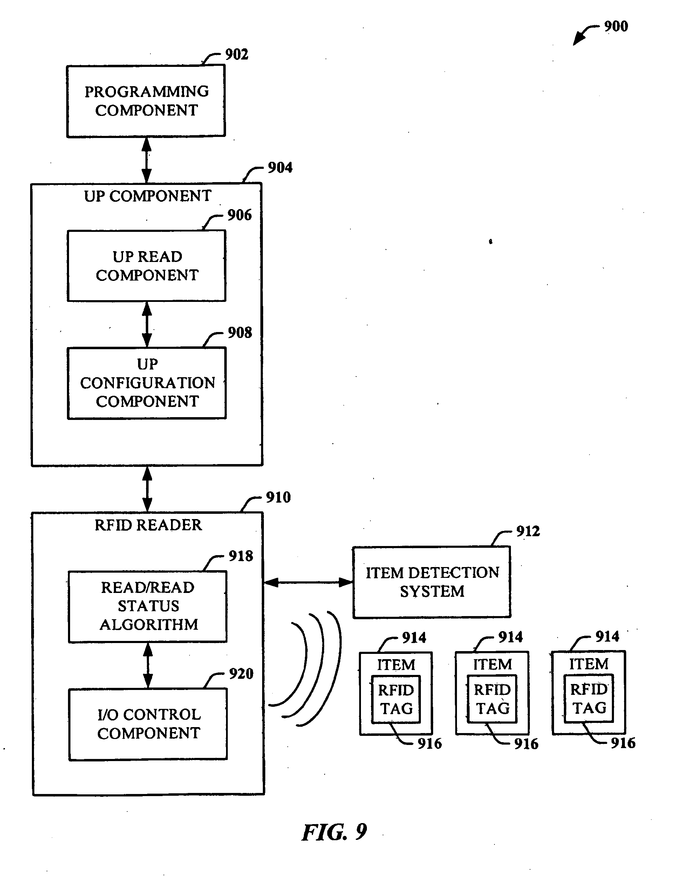

FIG. 9 illustrates a user-programmable system 900 for reading RFID tags in accordance with the subject invention. System 900 includes a programming component 902 that facilitates programming of a UP component 904, which UP component 904 further includes a UP read component 906 and a UP configuration component 908. The programming component 902 is user operable to download an application-specific program to the UP component 904. The program can be in a format suitable for execution in a PLC, a DeviceLogix device program, or other format compatible with the UP component 904. The UP component 904 interfaces to an RFID reader 910. An item detection system 912 interfaces to the RFID reader 910 such that item or product detection signals can be communicated thereto during read operations.

As described *supra,* an example of the item detection system 912 can be an optical scanning sensor switch that responds with a state change when the sensor beam is interrupted by an item 914 having an associated RFID tag 916. Upon notification from the item detection system 912, the RFID reader 910 can read and interrogate the RFID tag 916, and recover tag data. Similarly, other similar items 914 are illustrated having associated similar tags 916 that can be read and processed, along with detection signals that provide confirmation that the item should have been in position for reading at a predetermined time.

In this implementation, the reader 910 includes a read/read status algorithm 918 that facilitates a read operation and read status processing, and an I/O control component 920 that functions as an interface to external I/O systems, such as the item detection system 912, and other affiliated I/O systems (not shown), but utilized for the read process.

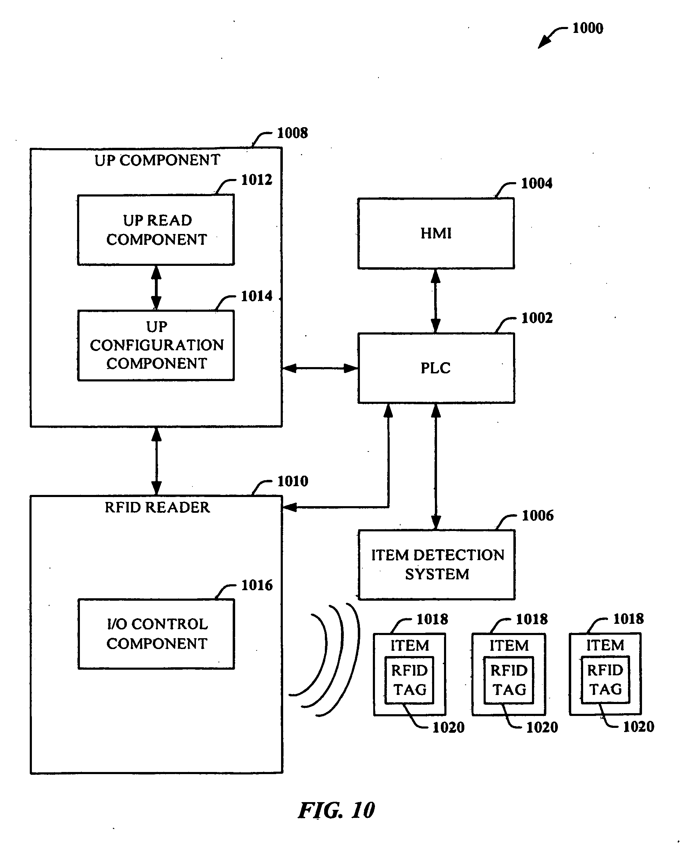

FIG. 10 illustrates a user-programmable system 1000 that employs a PLC 1002 and HMI (human machine interface) subsystem 1004 in accordance with the subject invention. The PLC 1002 can be employed for process control of an industrial process, for example. Here, the PLC 1002 interfaces to an item detection system 1006, a UP component 1008, and an RFID reader 1010. The UP component 1008 includes a UP read component 1012 and a UP configuration component 1014, the functionalities of which have been described *supra.* The reader 1010 can include an I/O component 1016 that facilitates I/O processing in the reader 1010 and I/O interfacing to external I/O systems employed in the specific environment.

The PLC 1002 can send an interrogation command to the RFID reader 1010 based on a detection signal from the item detection system 1006 and any other applicable control signals that may be employed for item processing. Upon notification from the item detection system 1006 of the presence of an item 1018, the RFID reader 1010 can read an item tag 1020, and recover tag data. Similarly, other similar items 1018 are illustrated having associated similar tags 1020 that can be read and processed, along with detection signals that provide confirmation that the item should have been in position for reading at a predetermined time.

The HMI 1004 interfaces to the PLC 1002 to facilitate human interaction for operation and monitoring of system processes and functions, to include, for example, the UP component 1008, the reader 1010, and the item detection system 1006. Further programmability and flexibility can be provided by incorporating the HMI 1004 into the system 1000. In this configuration, the HMI 1004 can facilitate editing application-specific programs and further, tailor system control to optimize system activity. Additionally, the HMI 1004 can be local to the PLC 1002 or it can be remote therefrom, whereby communications is *via* an IP network, a wireless system, a wired connection, or other suitable communications methods. Further, the HMI 1004 can display RFID data collected by the system 1000. The HMI 1004 can also provide data tracking programs, historian functions, alarms, enhanced user control, screen and information editing capacity, and other useful operations and applications commonly associated with HMI operability in a PLC system.

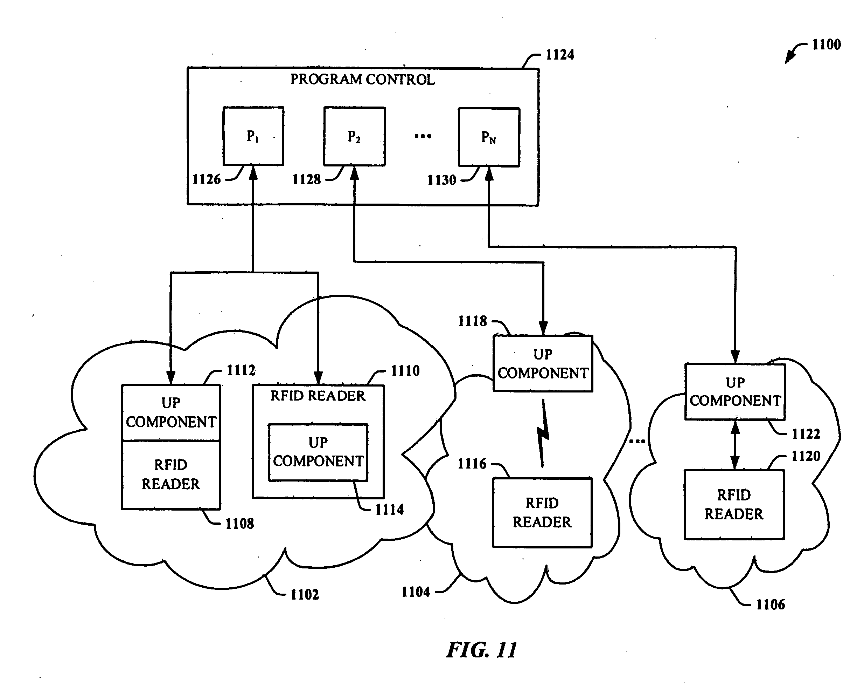

FIG. 11 illustrates a system 1100 that employs a plurality of RFID readers and associated UP components in different environments accordance with an innovative aspect. Here, three different environments are depicted: a first environment 1102, a second environment 1104, and a third environment 1106, each having one or more RFID readers for reading associate tagged items. The first environment 1102 include a first reader 1108 and a second reader 1110. The first reader 1108 has associated therewith a first UP component 1112 that is externally attachable to the reader housing for providing user programmability for the first environment 1102. The second reader 1114 has integrated therein a second UP component 1114 for user-programmability. The second environment 1104 includes a third reader 1116 and an associated third UP component 1118 that interfaces wirelessly to the third reader 1116 to provide user programmability for the second environment 1104. The third environment 1106 (or also considered an Nth environment) includes a fourth reader 1120 and an associated fourth UP component 1122 that can be tethered to the fourth reader 1120 *via* a communications cable such as can be utilized for USB and IEEE 1394 serial connections, for example. Thus, user programmability can be provided for the third environment 1106.

Each of the UP components (1112, 1114, 1118, and 1122) can be preconfigured with a user program suitable for operation of the respective readers and I/O of the environment. However, it is to be understood that such user programs can change based on changes in the environment, or by moving any of the readers (1108, 1110, 1116 and 1120) to different environments. Accordingly, the user can install different programs to the readers by any number of methods. For example, if a reader employs flash memory card capability, the user can simply replace the existing flash memory card that stores a first program with a second card that stores a different program.

Another mechanism can be employed whereby a centralized program control system 1124 is provided that communicates with the readers (1108, 1110, 1116 and 1120) and/or UP components (1112, 1114, 1118, and 1122). For example, the program system 1124 can communicate with the first UP component 1112 and the second reader 1110 of the first environment 1102 to facilitate uploading to the component and reader an update or different first user program 1126 (denoted P₁) suitable for operations in the first environment 1102. Similarly, the third UP component 1118 of the second environment 1104 communicates with the program system 1124 to receive a second user program 1128 (denoted P₂) suitable for operations in the second environment 1104. The fourth UP component 1122 of the third (or Nth) environment 1106 interfaces to the program system 1124 to receive a third (or Nth) user program 1130 that is suitable for operations in the third environment 1106.

It is to be appreciated that any number of programs can be operated and/or provided by the program system 1124. It is to be further appreciated that a single program can connect to a plurality of UP and RFID read components, as illustrated in the first environment 1102. Communications from the program system 1124 to the entities of the environments can be *via* IP networks, wired and/or wireless, for example.

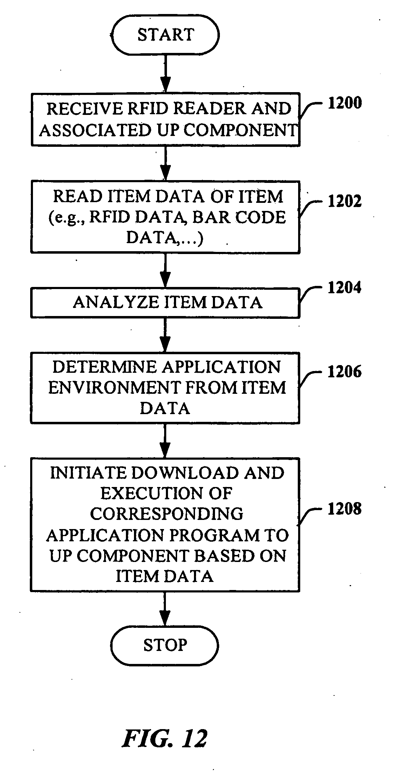

FIG. 12 illustrates a methodology of providing user program flexibility across different environments based on tag data according to an aspect of the subject invention. At 1200, an RFID reader and associated UP is received. At 1202, data is read from an item. It is to be noted that while RFID tag data has explicitly been mentioned *supra,* bar code data and other data is also applicable to the subject invention. A read can be effected by an interrogation command from the reader. Additionally a read can be triggered by an I/O device or plurality of I/O devices acting in cooperation that could trigger a bar code scan or the like. Regardless of the manner in which a read is carried out, data from the object is received.

At 1204, the item tag data is analyzed. Such an analysis can include an analysis of the format of the data received by the reader. For instance, as mentioned *supra,* disparate RFID tags can store data with varying bits and informational groupings. Part of the analysis of the format can include processing the format and choosing a corresponding algorithm (or user program) applicable to the RFID tag or bar code on the scanned item.

At 1206, the application environment, including the corresponding user program, can be determined from the item data. It is to be appreciated that while configuration of a UP component with a program specific to the environment has been depicted before a read occurs, the subject invention can be employed to automatically choose the applicable program from the product and/or tag data itself. In this manner, the user need not know the specific algorithm required to decode data from a specific tag. Rather, the user can provide a library of user programs from which to choose for upload into the UP component. Once a tag has been read, the program system will choose the appropriate UP configuration and equip the UP component accordingly. This capability provides system flexibility and applicability in a seamless manner from one RFID tag scan to the next. At 1208, download and execution of a corresponding application program is initiated to the UP component (directly or *via* the reader) based on the item data. Such a download can be manual and user controlled, or it can be automatically executed by a process, the application program based at least in part on the analysis of the item data.

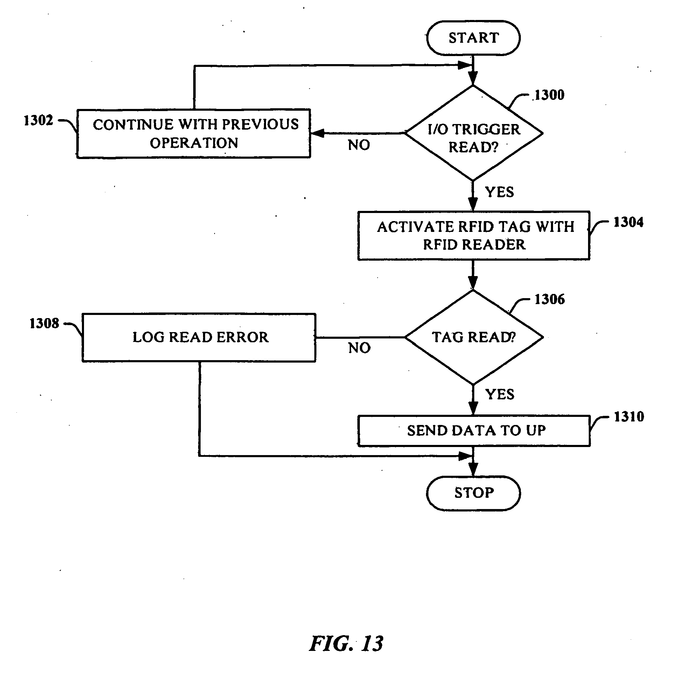

FIG. 13 illustrates a methodology of changing a user program based on tag data. At 1300, the system determines if an I/O trigger signal has been received that indicates a read operation should occur. If no, flow is to 1302 to continue normal operations and then back to 1300 to continue monitoring for a trigger signal. An example of the I/O trigger can be found in the previous conveyor example with the associated optical scanning sensor switch. At 1300, if the beam is currently broken by the presence of a tagged item, then the switch will trigger a read, and flow is from 1300 to 1304 to enable the reader to perform a tag read. It is to be appreciated that while the optical scanning sensor switch has been used to illustrate an I/O detection operation, other devices can be used to trigger a read. Such devices include limit switches, proximity sensors, timers, and the like.

At 1304, an RFID tag is activated by the RFID reader. Upon activation, the tag transmits the tag data. At 1306, the system determines if a valid read has occurred. An unsuccessful read can result from many factors, including but not limited to an errant I/O trigger, a faulty tag broadcast, and a reader that is out of position or out of range. If the tag is not read successfully, there can be a log made of the read error, as indicated at 1308. As a result of the read error, many different actions could occur, each action being configurable in the user program. Such actions can include an alarm signal, a request for user assistance, a stoppage of the running process, and the like. If the tag is read successfully, the data can be sent to a UP for processing and additional actions, as indicated at 1310, and/or directly to a PLC for processing and further transmission to a remote system.

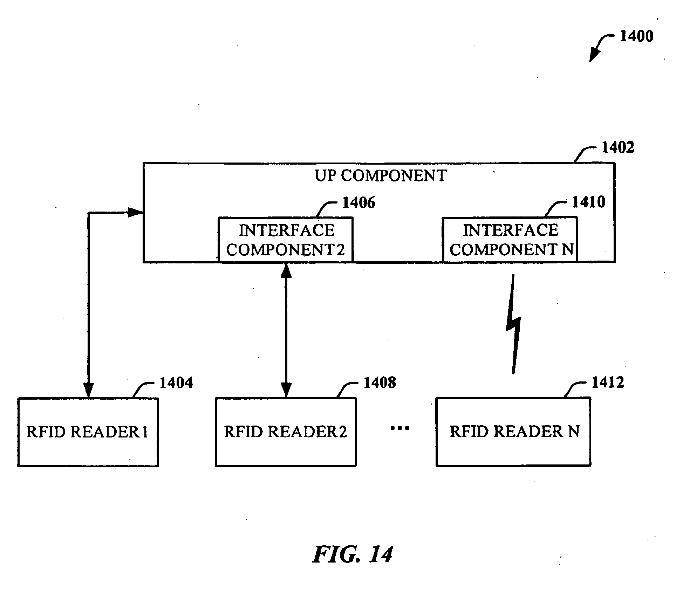

FIG. 14 illustrates a system 1400 where a UP component 1402 interfaces to multiple RFID readers in accordance with the disclose innovation. The UP component 1402 can interface directly to a first RFID reader 1404, interface through a second interface component 1406 to a second RFID reader 1408, and interface through a third (or Nth) interface component 1410 to a third (or Nth) RFID reader 1412. For example, consider that a user has a plurality of RFID reader. Each reader can have a different interface, as well as different programming and functionality. The user can obtain one or several UP components 1402 to accomplish configuring the RFID readers (1404, 1408, and 1412) to accommodate the corresponding differing environments. As such, previously owned RFID readers can perform tasks in a new system with a minimum of system reconfiguration. For instance, the RFID reader can perform a read and send the data to the UP component 1402. Since the UP component 1402 can include I/O user-configuration programs, as well as an algorithm that can process the given the RFID tag data, data can be readily collected by the reader and processed by the UP component 1402.

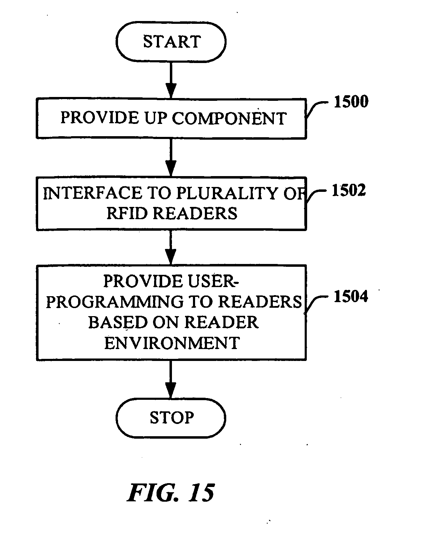

FIG. 15 illustrates a methodology of interfacing a single external UP component to multiple RFID readers according to an aspect. At 1500, a UP component is received. At 1502, the UP component is interfaced to two or more RFID readers. At 1504, an application specific program for each reader of an associated application environment can be uploaded to the UP component and stored. The program can be received into the UP component from a remote source such as *via* a network.

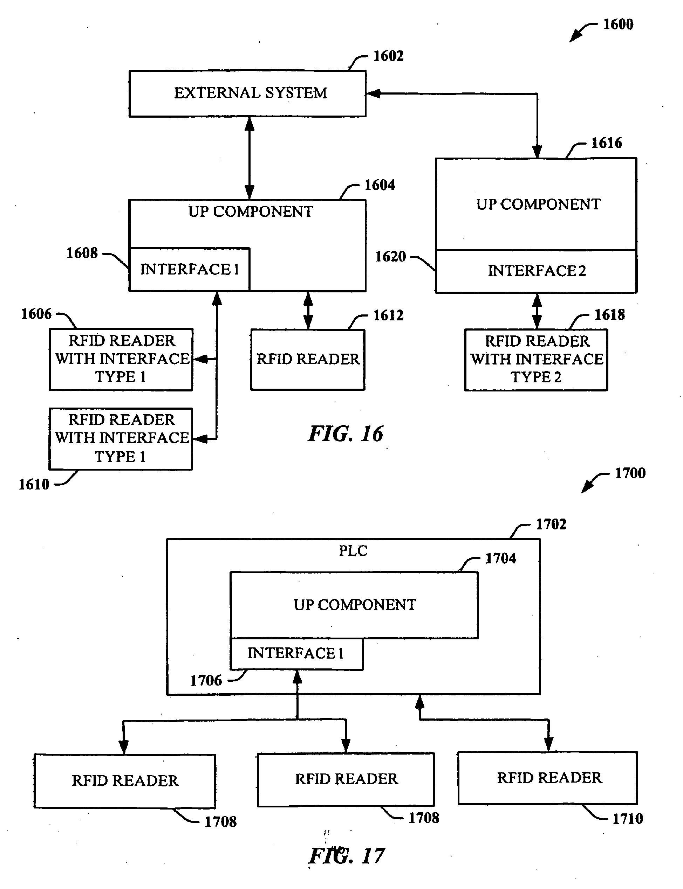

FIG. 16 illustrates a system 1600 that employs multiple UP components and multiple readers that communicate with an external system 1602 for program management. The system 1600 includes a first UP component 1604 that interfaces to two readers: a first reader 1606 of a first interface 1608 and a second reader 1610 of the first interface 1608. Additionally, the first UP component 1604 interfaces directly to a third RFID reader 1612 without the need for a specific interface, as illustrated with the first interface 1608. The system 1600 also includes a second UP component 1616 that interfaces to a fourth RFID reader 1618 *via* a second interface 1620. Each of the UP components (1604 and 1616) communicate with the external system 1602 to receive user-program updates and/or changes, and to which tag data can be transmitted.

FIG. 17 illustrates a system 1700 that employs a PLC 1702 which includes a UP component 1704. The PLC 1703 can be any industrial controller that monitors and controls a process. The UP component 1704 resides in the PLC 1702 and interfaces directly through a first interface 1706 to two RFID readers 1708. In another aspect, the UP component 1704 interfaces to a third RFID reader 1712 *via* the PLC 1702. Thus, user programming of the UP component 1704 can occur *via* a user interface that interacts with the PLC 1702. Where the PLC 1702 is a node on a packet-based network, user access and programming can occur from virtually anywhere, since access can then be obtained over the Internet, for example. Additionally, the PLC 1702 can aid in program changeout and selection for the UP component 1704 for the environment in which the PLC is employed.

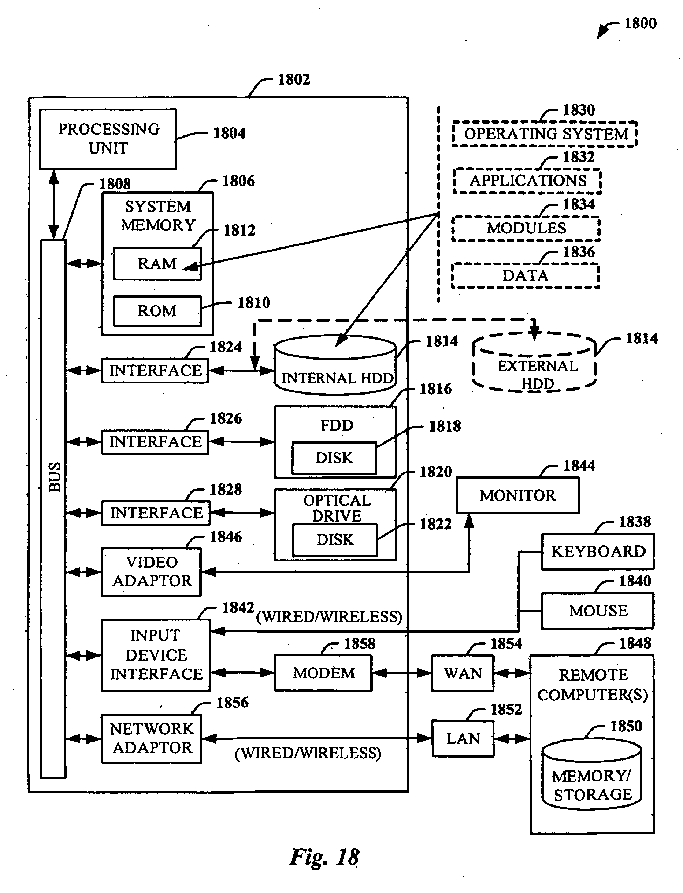

Referring now to FIG. 18, there is illustrated a block diagram of a computer operable to execute the disclosed architecture. In order to provide additional context for various aspects of the subject invention, FIG. 18 and the following discussion are intended to provide a brief, general description of a suitable computing environment 1800 in which the various aspects of the invention can be implemented. While the invention has been described above in the general context of computer-executable instructions that may run on one or more computers, those skilled in the art will recognize that the invention also can be implemented in combination with other program modules and/or as a combination of hardware and software.

Generally, program modules include routines, programs, components, data structures, *etc*., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the invention may also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and non-volatile media, removable and non-removable media. By way of example, and not limitation, computer-readable media can comprise computer storage media and communication media. Computer storage media includes both volatile and non-volatile memory, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

With reference again to FIG. 18, the exemplary environment 1800 for implementing various aspects of the invention includes a computer 1802, the computer 1802 including a processing unit 1804, a system memory 1806 and a system bus 1808. The system bus 1808 couples system components including, but not limited to, the system memory 1806 to the processing unit 1804. The processing unit 1804 can be any of various commercially available processors. Dual microprocessors and other multi-processor architectures may also be employed as the processing unit 1804.

The system bus 1808 can be any of several types of bus structure that may further interconnect to a memory bus (with or without a memory controller), a peripheral bus, and a local bus using any of a variety of commercially available bus architectures. The system memory 1806 includes read-only memory (ROM) 1810 and random access memory (RAM) 1812. A basic input/output system (BIOS) is stored in a non-volatile memory 1810 such as ROM, EPROM, EEPROM, which BIOS contains the basic routines that help to transfer information between elements within the computer 1802, such as during start-up. The RAM 1812 can also include a high-speed RAM such as static RAM for caching data.

The computer 1802 further includes an internal hard disk drive (HDD) 1814 (*e.g*., EIDE, SATA), which internal hard disk drive 1814 may also be configured for external use in a suitable chassis (not shown), a magnetic floppy disk drive (FDD) 1816, (*e.g*., to read from or write to a removable diskette 1818) and an optical disk drive 1820, (*e.g*., reading a CD-ROM disk 1822 or, to read from or write to other high capacity optical media such as the DVD). The hard disk drive 1814, magnetic disk drive 1816 and optical disk drive 1820 can be connected to the system bus 1808 by a hard disk drive interface 1824, a magnetic disk drive interface 1826 and an optical drive interface 1828, respectively. The interface 1824 for external drive implementations includes at least one or both of Universal Serial Bus (USB) and IEEE 1394 interface technologies. Other external drive connection technologies are within contemplation of the subject invention.

The drives and their associated computer-readable media provide nonvolatile storage of data, data structures, computer-executable instructions, and so forth. For the computer 1802, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the invention.

A number of program modules can be stored in the drives and RAM 1812, including an operating system 1830, one or more application programs 1832, other program modules 1834 and program data 1836. All or portions of the operating system, applications, modules, and/or data can also be cached in the RAM 1812. It is appreciated that the invention can be implemented with various commercially available operating systems or combinations of operating systems.

A user can enter commands and information into the computer 1802 through one or more wired/wireless input devices, *e.g*., a keyboard 1838 and a pointing device, such as a mouse 1840. Other input devices (not shown) may include a microphone, an IR remote control, a joystick, a game pad, a stylus pen, touch screen, or the like. These and other input devices are often connected to the processing unit 1804 through an input device interface 1842 that is coupled to the system bus 1808, but can be connected by other interfaces, such as a parallel port, an IEEE 1394 serial port, a game port, a USB port, an IR interface, *etc*.

A monitor 1844 or other type of display device is also connected to the system bus 1808 *via* an interface, such as a video adapter 1846. In addition to the monitor 1844, a computer typically includes other peripheral output devices (not shown), such as speakers, printers, *etc.*

The computer 1802 may operate in a networked environment using logical connections *via* wired and/or wireless communications to one or more remote computers, such as a remote computer(s) 1848. The remote computer(s) 1848 can be a workstation, a server computer, a router, a personal computer, portable computer, microprocessor-based entertainment appliance, a peer device or other common network node, and typically includes many or all of the elements described relative to the computer 1802, although, for purposes of brevity, only a memory/storage device 1850 is illustrated. The logical connections depicted include wired/wireless connectivity to a local area network (LAN) 1852 and/or larger networks, *e.g*., a wide area network (WAN) 1854. Such LAN and WAN networking environments are commonplace in offices and companies, and facilitate enterprise-wide computer networks, such as intranets, all of which may connect to a global communications network, e.g., the Internet.

When used in a LAN networking environment, the computer 1802 is connected to the local network 1852 through a wired and/or wireless communication network interface or adapter 1856. The adaptor 1856 may facilitate wired or wireless communication to the LAN 1852, which may also include a wireless access point disposed thereon for communicating with the wireless adaptor 1856.

When used in a WAN networking environment, the computer 1802 can include a modem 1858, or is connected to a communications server on the WAN 1854, or has other means for establishing communications over the WAN 1854, such as by way of the Internet. The modem 1858, which can be internal or external and a wired or wireless device, is connected to the system bus 1808 *via* the serial port interface 1842. In a networked environment, program modules depicted relative to the computer 1802, or portions thereof, can be stored in the remote memory/storage device 1850. It will be appreciated that the network connections shown are exemplary and other means of establishing a communications link between the computers can be used.

The computer 1802 is operable to communicate with any wireless devices or entities operatively disposed in wireless communication*, e.g*., a printer, scanner, desktop and/or portable computer, portable data assistant, communications satellite, any piece of equipment or location associated with a wirelessly detectable tag (*e.g*., a kiosk, news stand, restroom), and telephone. This includes at least Wi-Fi and Bluetooth^{™} wireless technologies. Thus, the communication can be a predefined structure as with a conventional network or simply an ad hoc communication between at least two devices.

Wi-Fi, or Wireless Fidelity, allows connection to the Internet from a couch at home, a bed in a hotel room, or a conference room at work, without wires. Wi-Fi is a wireless technology similar to that used in a cell phone that enables such devices, *e.g*., computers, to send and receive data indoors and out; anywhere within the range of a base station. Wi-Fi networks use radio technologies called IEEE 802.11 (a, b, g, *etc*.) to provide secure, reliable, fast wireless connectivity. A Wi-Fi network can be used to connect computers to each other, to the Internet, and to wired networks (which use IEEE 802.3 or Ethernet). Wi-Fi networks operate in the unlicensed 2.4 and 5 GHz radio bands, at an 11 Mbps (802.11 a) or 54 Mbps (802.11 b) data rate, for example, or with products that contain both bands (dual band), so the networks can provide real-world performance similar to the basic 10BaseT wired Ethernet networks used in many offices.

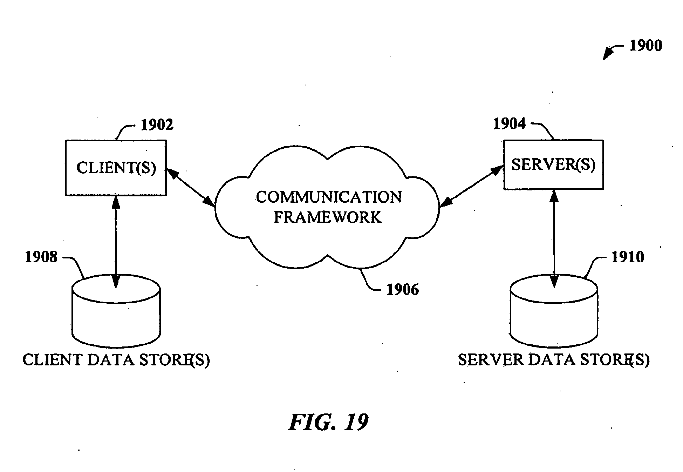

Referring now to FIG. 19, there is illustrated a schematic block diagram of an exemplary computing environment 1900 in accordance with the subject invention. The system 1900 includes one or more client(s) 1902. The client(s) 1902 can be hardware and/or software (*e.g*., threads, processes, computing devices). The client(s) 1902 can house cookie(s) and/or associated contextual information by employing the invention, for example.

The system 1900 also includes one or more server(s) 1904. The server(s) 1904 can also be hardware and/or software (*e.g*., threads, processes, computing devices). The servers 1904 can house threads to perform transformations by employing the invention, for example. One possible communication between a client 1902 and a server 1904 can be in the form of a data packet adapted to be transmitted between two or more computer processes. The data packet may include a cookie and/or associated contextual information, for example. The system 1900 includes a communication framework 1906 (*e.g.,* a global communication network such as the Internet) that can be employed to facilitate communications between the client(s) 1902 and the server(s) 1904.

Communications can be facilitated *via* a wired (including optical fiber) and/or wireless technology. The client(s) 1902 are operatively connected to one or more client data store(s) 1908 that can be employed to store information local to the client(s) 1902 (*e.g*., cookie(s) and/or associated contextual information). Similarly, the server(s) 1904 are operatively connected to one or more server data store(s) 1910 that can be employed to store information local to the servers 1904.

What has been described above includes examples of the invention. It is, of course, not possible to describe every conceivable combination of components or methodologies for purposes of describing the subject invention, but one of ordinary skill in the art may recognize that many further combinations and permutations of the invention are possible. Accordingly, the invention is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

In summary the invention discloses a user-programmable (UP) component for an RFID reader. The UP component facilitates reading an RFID tag and interfacing to I/O that functions as a validation mechanism that the read operation has occurred. The UP component facilitates application of the reader to new and/or different systems and products. The UP component can be a separate external device or module that interfaces to the RFID reader, or can be integrated into the reader for operation therein.

## Claims

1. A radio frequency identification, RFID, system (1400), comprising:
a first reader component (1404) that performs a read operation which reads data from a first RFID tag and sends the read data to a user programmable component (1402); and
a second reader component (1408) that performs a read operation which reads data from a second RFID tag and sends the read data to the user programmable component; and
the user programmable component (1402) that comprises a first interface for receiving data from the first reader component (1404) and a second interface component (1406) for receiving data from the second reader component (1408);
**characterized in that**
the user programmable component (1402) is configured to receive and store a first application specific program for processing data received from the first reader component (1404) and a second application specific program for processing data received from the second reader component (1408), wherein a new application specific program is automatically uploaded to the user programmable component (1402) when the user programmable component (1402) determines that data received from one of the reader components (1404, 1408) is different from previous received data.

2. The system of claim 1, wherein the user programmable component (1402) is user programmable for configuration of an input/output parameter associated with a status of the read operation.

3. The system of claim 1 or 2, wherein the RFID system (1400) comprises a third reader component (1412) that performs a read operation which reads data from a third RFID tag and sends the read data to the user programmable component (1402), and wherein the user programmable component is configured to receive and store a third application specific program for processing data received from the third reader component (1412).

4. The system of claim 1, wherein the user-programmable component is internal to a PLC.

5. A method of controlling two or more radio frequency identification, RFID, readers, comprising:
providing (1502) a user-programmable component;
interfacing (1502) the user programmable component to two or more RFID readers via two or more interfaces comprised in the user programmable component;
uploading and storing (1504) an application specific program for each reader via the respective interfaces based on an associated environment of each reader;
controlling the RFID reader to read RFID tags; and
processing data from the read RFID tags according to the respective application specific program; and
uploading a new application specific program to the user-programmable component when one of the RFID readers reads tag data that is different from previous tag data.

6. The method of claim 5, further comprising modifying the application specific program stored for one of the RFID readers when the RFID reader is moved to a new environment.

## Patentansprüche

1. Funkfrequenzidentifizierungssystem, RFID-System (1400), das umfasst:
eine erste Leserkomponente (1404), die eine Leseoperation ausführt, die Daten von einem ersten RFID-Etikett liest und die gelesenen Daten zu einer anwenderprogrammierbaren Komponente (1402) sendet; und
eine zweite Leserkomponente (1408), die eine Leseoperation ausführt, die Daten von einem zweiten RFID-Etikett liest und die gelesenen Daten zu der anwenderprogrammierbaren Komponente sendet; und
die anwenderprogrammierbare Komponente (1402), die eine erste Schnittstelle zum Empfangen von Daten von der ersten Leserkomponente (1404) und eine zweite Schnittstellenkomponente (1406) zum Empfangen von Daten von der zweiten Leserkomponente (1408) enthält;
**dadurch gekennzeichnet, dass**
die anwenderprogrammierbare Komponente (1402) konfiguriert ist, um ein erstes anwendungsspezifisches Programm zum Verarbeiten von Daten, die von der ersten Leserkomponente (1404) empfangen werden, und ein zweites anwendungsspezifisches Programm zum Verarbeiten von Daten, die von der zweiten Leserkomponente (1408) empfangen werden, zu verarbeiten und zu speichern, wobei ein neues anwendungsspezifisches Programm automatisch in die anwenderprogrammierbare Komponente (1402) hochgeladen wird, wenn die anwenderprogrammierbare Komponente (1402) bestimmt, dass die von einer der Leserkomponenten (1404, 1408) empfangenen Daten von früher empfangenen Daten verschieden sind.

2. System nach Anspruch 1, wobei die anwenderprogrammierbare Komponente (1402) anwenderprogrammierbar ist, um einen Eingabe/Ausgabe-Parameter, der einem Status der Leseoperation zugeordnet ist, zu konfigurieren.

3. System nach Anspruch 1 oder 2, wobei das RFID-System (1400) eine dritte Leserkomponente (1412) umfasst, die eine Leseoperation ausführt, die Daten von einem dritten RFID-Etikett liest und die gelesenen Daten zu der anwenderprogrammierbaren Komponente (1402) sendet, und wobei die anwenderprogrammierbare Komponente konfiguriert ist, um ein drittes anwendungsspezifisches Programm zum Verarbeiten von Daten, die von der dritten Leserkomponente (1412) empfangen werden, zu empfangen und zu speichern.

4. System nach Anspruch 1, wobei die anwenderprogrammierbare Komponente in einer PLC enthalten ist.

5. Verfahren zum Steuern von zwei oder mehr Funkfrequenzidentifizierungslesern, RFID-Lesern, das umfasst:
Bereitstellen (1502) einer anwenderprogrammierbaren Komponente;
Bilden einer Schnittstelle (1502) zwischen der anwenderprogrammierbaren Komponente und zwei oder mehr RFID-Lesern über zwei oder mehr Schnittstellen, die in der anwenderprogrammierbaren Komponente enthalten sind;
Hochladen und Speichern (1504) eines anwendungsspezifischen Programms für jeden Leser über die jeweiligen Schnittstellen auf der Grundlage einer zugeordneten Umgebung jedes Lesers;
Steuern des RFID-Lesers, um RFID-Etiketten zu lesen; und
Verarbeiten von Daten von den gelesenen RFID-Etiketten in Übereinstimmung mit dem jeweiligen anwendungsspezifischen Programm; und
Hochladen eines neuen anwendungsspezifischen Programms in die anwenderprogrammierbare Komponente, wenn einer der RFID-Leser Etikettdaten liest, die von früheren Etikettdaten verschieden sind.

6. Verfahren nach Anspruch 5, das ferner das Modifizieren des in einem der RFID-Leser gespeicherten anwendungsspezifischen Programms umfasst, wenn sich der RFID-Leser in eine neue Umgebung bewegt hat.

## Revendications

1. Système d'identification radiofréquence RFID (1400) comprenant :
un premier composant lecteur (1404) qui effectue une opération de lecture consistant à lire des données depuis une première étiquette RFID et à envoyer les données lues à un composant programmable par l'utilisateur (1402) ; et
un deuxième composant lecteur (1408) qui effectue une opération de lecture consistant à lire des données depuis une deuxième étiquette RFID et à envoyer les données lues à au composant programmable par l'utilisateur ; et
le composant lecteur programmable par l'utilisateur (1402) qui comprend une première interface permettant de recevoir des données du premier composant lecteur (1404) et un deuxième composant d'interface (1406) permettant de recevoir des données du deuxième composant lecteur (1408) ;
**caractérisé en ce que**
le composant programmable d'utilisateur (1402) est configuré pour recevoir et stocker un premier programme spécifique d'applications destiné à traiter des données reçues du premier composant lecteur (1404) et un deuxième programme spécifique d'applications destiné à traiter des données reçues du deuxième composant lecteur (1408), dans lequel un nouveau programme spécifique d'applications est automatiquement téléchargé vers le composant programmable par l'utilisateur (1402) lorsque le composant programmable par l'utilisateur (1402) détermine que les données reçues de l'un des composants lecteurs (1404, 1408) sont différentes des données précédemment reçues.

2. Système selon la revendication 1, dans lequel le composant programmable par l'utilisateur (1402) est programmable par l'utilisateur pour configurer un paramètre d'entrée/sortie associé à un état de l'opération de lecture.

3. Système selon la revendication 1 ou 2, dans lequel le système RFID (1400) comprend un troisième composant lecteur (1412) qui effectue une opération de lecture consistant à lire des données depuis une troisième étiquette RFID et à envoyer les données lues au composant programmable par l'utilisateur (1402), et dans lequel le composant programmable par l'utilisateur est configuré pour recevoir et stocker un troisième programme spécifique d'applications destiné à traiter des données reçues du troisième composant lecteur (1412).

4. Système selon la revendication 1, dans lequel le composant programmable par l'utilisateur est interne à un circuit PLC.

5. Procédé de commande de deux ou plusieurs lecteurs d'identification radiofréquence RFID, consistant à :
fournir (1502) un composant programmable par l'utilisateur ;
interfacer (1502) le composant programmable par l'utilisateur avec deux ou plusieurs lecteurs RFID par l'intermédiaire de deux ou plusieurs interfaces contenues dans le composant programmable par l'utilisateur ;
télécharger et stocker (1504) un programme spécifique d'applications pour chaque lecteur par l'intermédiaire des interfaces respectives sur la base d'un environnement associé de chaque lecteur ;
commander le lecteur RFID afin qu'il lise des étiquettes RFID ; et
traiter les données provenant des étiquettes RFID lues conformément au programme spécifique d'applications respectif ; et
télécharger un nouveau programme spécifique d'applications dans le composant programmable par l'utilisateur lorsque l'un des lecteurs RFID lit des données d'étiquettes qui sont différentes de données d'étiquettes précédentes.

6. Procédé selon la revendication 5, consistant en outre à modifier le programme spécifique d'applications stocké pour l'un des lecteurs RFID lorsque le lecteur RFID est déplacé dans un nouvel environnement.
